# EUROPEAN PATENT SPECIFICATION

(11) **EP 4 685 012 B1**
(45) Date of publication and mention of the grant of the patent: **22.07.2026**
(21) Application number: 24191452.2
(22) Date of filing: 29.07.2024
(51) Int. Cl.: B60R 9/06, B60R 9/10

(54) **LOAD CARRIER, IN PARTICULAR BIKE CARRIER, AND VEHICLE**
LASTTRÄGER, INSBESONDERE FAHRRADTRÄGER, UND FAHRZEUG
PORTE-CHARGE, EN PARTICULIER PORTE-VÉLO, ET VÉHICULE

(30) Priority: 22.07.2024 CN 202410989144
(43) Date of publication of application: 28.01.2026
(73) Proprietor: Carman Enterprise Co., Ltd, Hangzhou 311121 (CN)
(72) Inventor: Li, Xianwei, Hangzhou, 311121 (CN)
(74) Representative: Paul & Albrecht Patentanwälte PartG mbB

(56) References cited:
- EP-A1- 2 082 922
- EP-A1- 2 159 106
- EP-B1- 2 848 473
- WO-A1-2023/283738
- DE-B4- 19 900 601
- US-A- 5 456 564
- US-A1- 2003 099 531
- US-A1- 2014 308 101
- US-B2- 10 118 530

## Description

The present invention relates to a load carrier, in particular a bike carrier, for attachment to a vehicle, the load carrier comprising a basic structure, a front end of which can be attached to a vehicle, in particular to a rear wall of a caravan or of a motorhome, and a load receiving structure for receiving a load, in particular for receiving at least one bike or a luggage box, wherein the load carrier further comprises a lifting mechanism, via which the load receiving structure is held at the basic structure in such a way that it can be moved relative to the basic structure between a lower loading position, in which a load can be arranged on the load receiving structure, and an upper use position, in which the load receiving structure is directly held at the basic structure.

Furthermore, the present invention relates to a vehicle, in particular a caravan.

Load carriers for attachment to the rear end of a vehicle, in particular of a caravan, are often used for transporting bikes and/or for carrying a luggage box. Generally, this type of load carrier comprises attachment means by means of which it can be fixed to the rear end of a caravan, in particular to the rear wall of a caravan. In order to facilitate the attachment of loads, for example of bikes, to such a load carrier, the load carrier comprises a basic structure, which is or can be directly attached to the rear end of a vehicle, and a load receiving structure, which is held at the vehicle via a lifting mechanism such that the load receiving structure can be moved between a lower loading position, in which the load to be transported can be positioned on the load receiving structure, and an upper use position, in which the load receiving structure is spaced apart from the ground, so that the load can be transported easily and without the risk of getting into contact with the ground.

Such lifting mechanisms are often designed such that the operator must move the load receiving structure together with the load, for example a bike, arranged thereon by hand from its loading position into its use position. For doing so, the operator needs a significant amount of force in particular when heavy loads, for example E-Bikes, should be transported. In other words, the operator must apply the entire gravity force of the load receiving structure and the load to be transported thereon in order to bring the load receiving structure into its use position.

Load carriers with such a lifting mechanism are disclosed for example in EP 2 848 473 B1, EP 2 159 196 A1, EP 2 082 922 A1 and US10,118,530 B2, showing the preamble of claim 1.

Based on this prior art, it is an object of the present invention to provide an alternative load carrier, in particular a bike carrier, which in particular avoids the above-mentioned disadvantages and which preferably allows to handle heavy loads such as a plurality of E-bikes in an easy way for the operator. This object is solved by a load carrier according to claim 1. The invention is based on the consideration to provide an electrical drive motor which creates the force to bring the load receiving structure in particular from its lower loading position into its upper use position. Such a drive motor is capable to handle heavier loads such as a plurality of E-bikes or a heavy luggage box. When the load carrier is attached to a vehicle, the load receiving structure may be positioned near the ground in its lower loading position so that a load can be arranged on the load receiving structure in a simple manner. In its upper use position, the load receiving structure may be spaced apart from the ground when the load carrier is attached to a vehicle.

According to a preferred embodiment, the drive means comprise at least one spindle, which is coupled to the drive motor and preferably extends in a vertical direction, and a spindle nut, which is in engagement with the spindle such that the spindle nut can be moved along a longitudinal direction of the spindle, when the spindle is set in rotation, in order to move the load receiving structure between its loading position and its upper use position. In other words, a spindle drive may be provided, which comprises a spindle, that can be set in rotation, and a corresponding spindle nut, which is preferably arranged in such a way that it cannot rotate about the longitudinal direction of the spindle. Accordingly, when the spindle is set in rotation, the corresponding spindle nut can be moved along a longitudinal direction of the spindle. Such a spindle mechanism allows to convert a rotational movement of the spindle into a translational movement of the spindle nut.

The at least one spindle may be held rotatably at the basic structure and the spindle nut may be connected to the load receiving structure.

According to a preferred embodiment, the lifting mechanism may comprise at least one linkage. One spindle may be assigned to each linkage. Preferably, the lifting mechanism comprises two linkages spaced apart from each other in a lateral direction and arranged parallel to each other. By means of such a linkage, the movement of the load receiving structure relative to the basic structure is guided in a very efficient manner. In particular in the case when two linkages are provided, a stable and robust design can be realized.

Each linkage may be formed as a parallelogram linkage. This means, that different cranks, the basic structure and the load receiving structure are pivotably connected to each other in such a way that a parallelogram is formed. By means of such a parallelogram linkage, it can be ensured that the load receiving structure cannot be tilted relative to the basic structure when the load receiving structure is moved between its loading position and its use position.

In a further elaboration, each linkage may comprise two cranks, one upper crank and one lower crank, one end of each crank being pivotably held at the basic structure and the other end of each crank being pivotably held at the load receiving structure. In other words, the basic structure and the load receiving structure are connected to each other via two cranks. Preferably, the cranks extend parallel to each other. Furthermore, the cranks may extend at least substantially vertically, when the load receiving structure is in its upper use position. The vertical direction may be related to a situation, when the load carrier is attached to a rear end of a vehicle, in particular to the rear wall of a caravan.

Each linkage may comprise at least one tension rod, one end of which is pivotably connected to a crank. In particular, one end of the tension rod may be connected to a central section of a crank. Preferably, one end of the tension rod is connected to the upper crank. The other end of the tension rod may be pivotably connected to the spindle nut in order to move the load receiving structure between the lower loading position and the upper use position, when the spindle is set in rotation. In concrete terms, the pivotable connection of the tension rod and the crank, and/or of the tension rod and the spindle nut may be realized by means of pivot bolts, which extend through corresponding openings formed in the tension rod, the crank and/or the spindle nut.

In a further elaboration, each linkage may comprise two tension rods in particular mounted on opposite lateral sides of the crank and/or of the spindle nut. Providing two tension rods arranged on opposite lateral sides allows a symmetric load and reduces the risk of tilting/canting. Preferably, the cranks of each linkage are held at a lower end section of the basic structure at one end and at an upper end section of the load receiving structure at the other end. In this way, the load receiving structure can be moved towards the bottom, so that in its loading position the load receiving structure can be located at least substantially, in particular completely below the basic structure. In its use position, the load receiving structure can overlap at least partially with the basic structure when seen from behind.

The basic structure may have at least one vertical profile, in particular one vertical profile assigned to each linkage. The vertical profile may extend at least substantially vertically when the basic structure is attached to a vehicle, in particular to the rear wall of a motorhome or a caravan. The cranks may be held at a lower end section of the vertical profile(s). The load receiving structure may have, assigned to each vertical profile, a supporting profile, which preferably extends parallel to the vertical profile and which preferably lies on the corresponding vertical profile, when the load receiving structure is in its use position. The vertical profile may be formed by a bent tube and may also be equipped with cover elements which protect the vertical profile. In concrete terms, the cover elements may have a U-shaped cross-section and are arranged at the vertical profile in such a way that they are open rearwardly. The supporting profile may be bent and/or punched out of a profile and/or may also be surrounded at least partially by a cover element. In combination with a parallelogram linkage, it is ensured, that the vertical profiles and the supporting profiles always extend parallel to each other so that a tilting of the load receiving structure relative to the basic structure is avoided.

In concrete terms, each spindle may be arranged on a front side of the vertical profile (assigned to the corresponding linkage) and/or may be held rotatably at an upper end section and at a lower end section of the vertical profile.

In particular in case when the lifting mechanism comprises two linkages and correspondingly two vertical profiles spaced apart from each other and extending parallel to each other, the drive means may comprise a transmission shaft, which is coupled to the drive motor, in particular via a worm gear, and to at least one, in particular to each spindle in order to ensure an synchronous rotation of both spindles in particular via a bevel gear. In other words, it may be provided that the drive motor drives a transmission shaft, which converts or transmits the rotational movement to both spindles. In this way, it is ensured that both spindles always rotate in the same direction with the same speed, thus ensuring that both lifting mechanisms or linkages respectively are always in the same position. A worm gear converting a rotary movement of a shaft of the drive motor into a rotary movement of the transmission shaft allows a high transmission ratio so that a high rotational speed of the drive motor can be converted into a comparatively low speed of the transmission shaft. A gear assigned to each spindle allows to convert the rotary movement of the transmission shaft into a rotary movement of the spindle, wherein the transmission shaft preferably extends in a horizontal direction and the spindles preferably extend in a vertical direction.

Preferably, the transmission shaft is held rotatably at the basic structure, in particular at an upper end section of the vertical profiles. In concrete terms, this may be realized by corresponding bearings which are provided at the vertical profiles and by means of which the transmission shaft is beard. The transmission shaft may extend at least substantially horizontally. Preferably, the transmission shaft extends between two vertical profiles spaced apart from each other and extending parallel to each other.

The drive means may comprise manual operating means, which are arranged and designed such that an operator can move the load receiving structure between its upper use position and its lower loading position without operating the drive motor. This embodiment is based on the consideration to provide a possibility for an operator to move the load receiving structure relative to the basic structure even if the drive motor cannot be operated for example if no electrical energy is available.

In concrete terms, the manual operating means may comprise an engagement contour, in particular having a quadratical or hexagonal cross-section. In this way, an operator can bring a corresponding tool into engagement with the engagement contour in order to move the load receiving structure relative to the basic structure. The engagement contour may be formed at the transmission shaft or may be connected to the transmission shaft, in particular at an end of a transmission shaft, preferably accessible from a lateral side. In this way it is easy for an operator to bring a corresponding tool in engagement with the engagement contour in order to rotate the transmission shaft and, consequently, both spindles in order to move the load receiving structure relative to the basic structure.

According to the invention, the drive means comprise a power supply unit. Such a power supply unit may comprise a battery, in particular a rechargeable battery, preferably a lithium-ion-battery, in order to supply electrical energy to the drive motor. This embodiment is based on the consideration to provide a separate power supply unit comprising a battery, so that it is not necessary to provide a cabled power supply for example from the interior of a vehicle. In the way, the load carrier can be used independently from the vehicle and no cable must be provided in order to supply the load carrier with electrical energy.

According to a preferred embodiment, the power supply unit may comprise control means in order to control the drive motor, in particular to control the rotation speed and the direction of rotation of the drive motor. In other words, the power supply unit may also act as a control device in order to control the drive motor. For this purpose, the power supply unit may be provided with a human-machine-interface, which may comprise specific buttons or keys and/or means to connect the power supply unit with a remote control unit or with a mobile device such as a smartphone.

According to the invention, the power supply unit has attachment means in order to attach the power supply unit releasably to the basic structure, in particular to a vertical profile of the basic structure. Accordingly, the power supply unit is not fixedly connected to the rest of the load carrier, but can be detached and attached selectively and can be used in connection with different load carriers. In particular for charging the power supply unit, it can be detached from the load carrier and can be attached once the power supply unit is fully charged.

Preferably, the drive motor is fixed to the basic structure, in particular to a vertical profile of the basic structure.

The load receiving structure, in particular a central bottom section of the load receiving structure extending rearwardly, may carry at least one, in particular one, two or three profile rail(s) in order to receive the wheels of a corresponding number of bikes. Furthermore, the load receiving structure may have, in particular at an upper end section, a yoke extending rearwardly in order to support the frame of a bike to the load receiving structure. It is also conceivable that a luggage box is provided or may be arranged on the load receiving structure.

The object of the invention is also solved by a vehicle, in particular a caravan or a motorhome with a load carrier as described above, wherein the load carrier is preferably attached to the rear wall of a vehicle.

With regard to the embodiment of the invention, reference is also made to the sub-claims and to the following description of an exemplary embodiment with reference to the attached drawing. In the drawing shows:
- Figure 1: a caravan with a load carrier according to the invention in a perspective view;
- Figure 2: the load carrier of figure 1 carrying two bikes, wherein the load receiving structure is in its loading position, in a perspective view;
- Figure 3: the load carrier of figure 1 carrying two bikes, wherein the load receiving structure is in its use position, in a perspective view;
- Figure 4: the load carrier of figure 1, wherein the load receiving structure is in its loading position;
- Figure 5: the load carrier of figure 1, wherein the load receiving structure is in its use position, in a perspective view;
- Figure 6: the load carrier of figure 1 without some cover elements, wherein the load receiving structure is in its loading position, in a perspective view;
- Figure 7: the load carrier of figure 1 without some cover elements, wherein the load receiving structure is in its loading position, in another perspective view;
- Figure 8: the load carrier of figure 1 without some cover elements, wherein the load receiving structure is in its use position, in a perspective view;
- Figure 9: the drive means of the load carrier of figure 1 in a front view;
- Figure 10: the drive means shown in figure 9 in an exploded view;

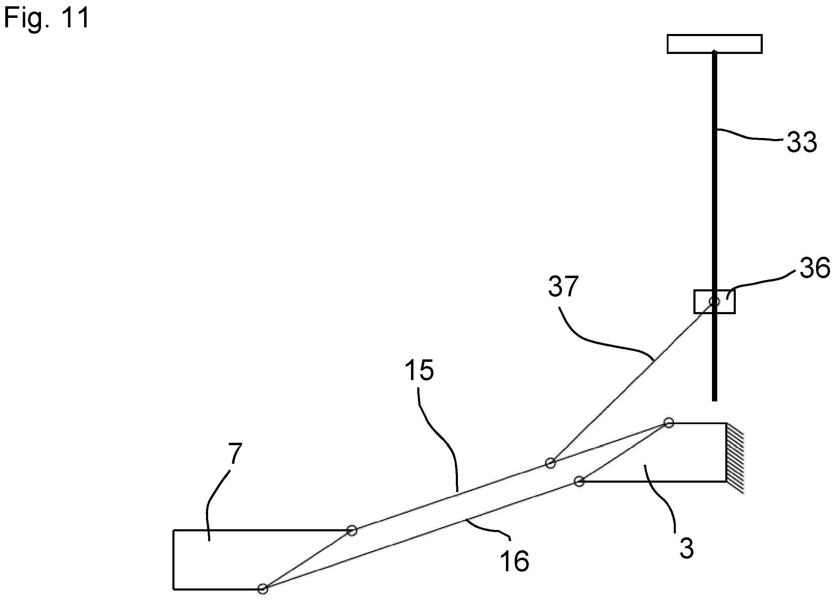

- Figure 11: the linkage of the load carrier of figure 1 in its loading position in a schematical view;

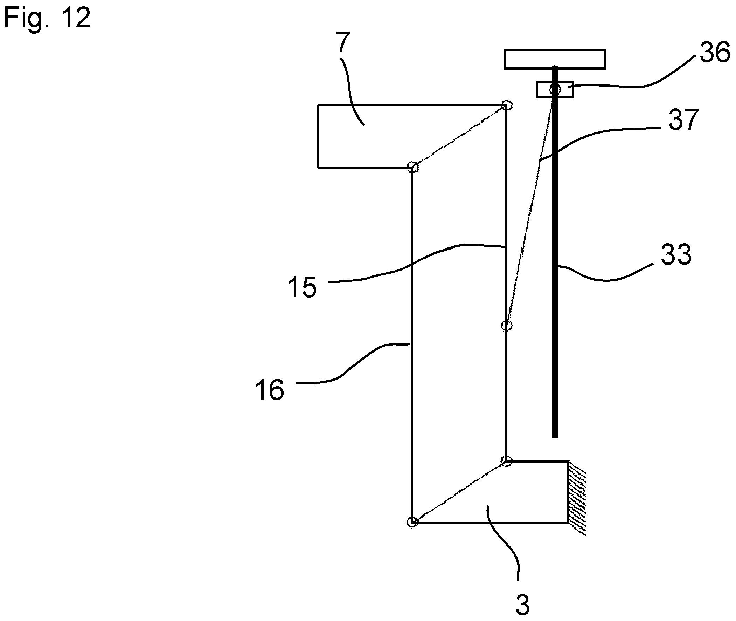

- Figure 12: the linkage shown in figure 11 in its use position in a schematical view; and

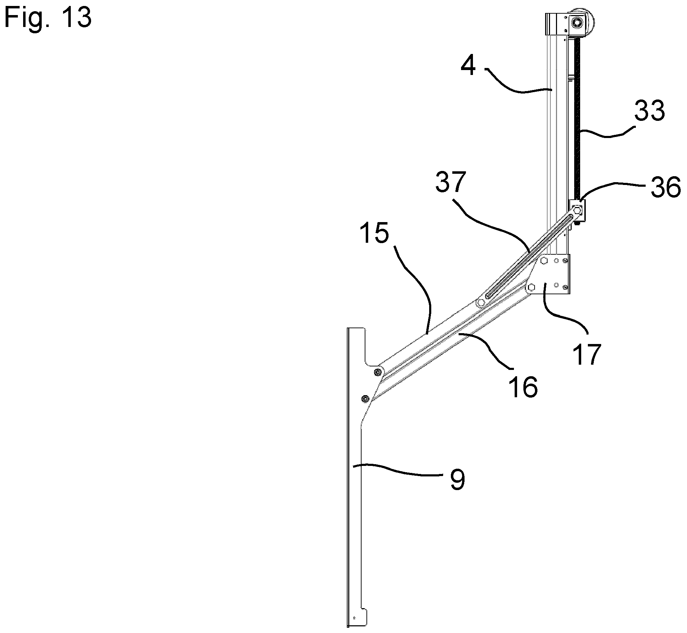

- Figure 13: the linkage of the load carrier of figure 1 in a side view.

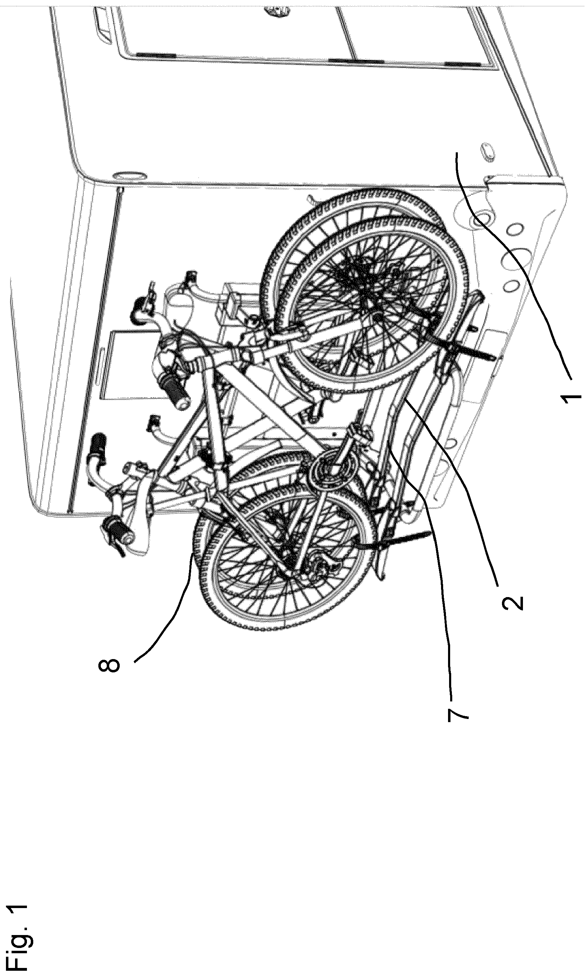

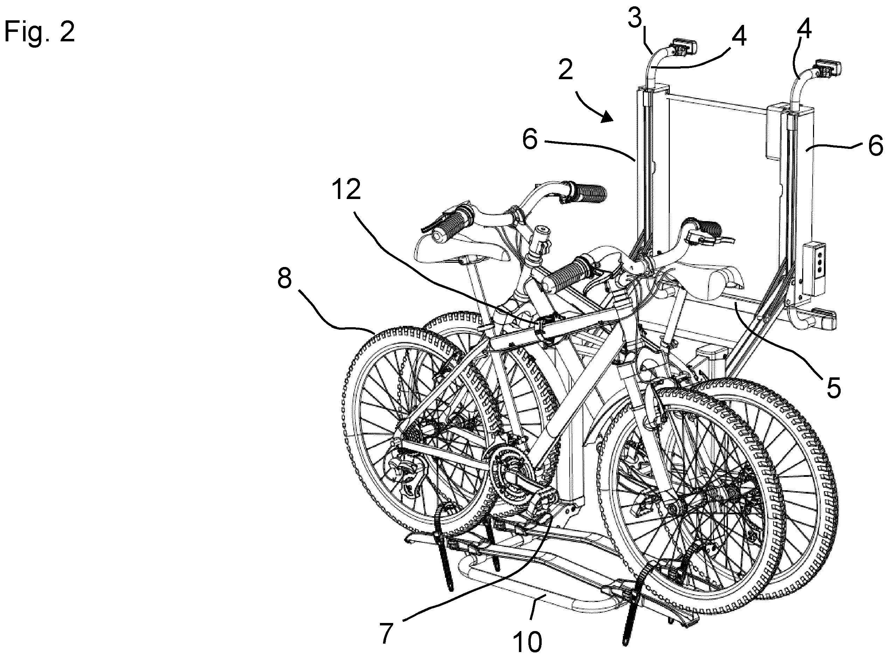

Figure 1 shows a rear section of a caravan 1 and a load carrier 2 according to the invention in the form of a bike carrier, which is attached to the rear wall of the caravan 1. The load carrier 2 comprises a basic structure 3. This basic structure 3 comprises, as it is visible for example in figure 2, two vertical profiles 4 in the form of a bent tube in the shape of a C. The vertical profiles 4 are arranged parallel to each other and are spaced apart laterally from each other. The free ends of the vertical profiles 4 are attached to the wall of the caravan 1.

The basic structure 3 further comprises a transverse beam 5, which connects the vertical profiles 4 in a lower region. In the middle section of the vertical profiles 4, the basic structure 3 comprises cover elements 6, which surrounds the vertical profile in a middle section partially and allows access to the vertical profiles 4 from a rear side.

The load carrier 2 further comprises a load receiving structure 7 for receiving, in the present case, exactly two bikes 8 as it is shown in figures 1 to 3. The load receiving structure 7 comprises two supporting profiles 9, which extend parallel to each other and are spaced apart from one another at the same distance as the vertical profiles 4 of the basic structure 3 are spaced apart from one another. The load receiving structure 7 further comprises a central bottom section 10, which is made of a U-shaped bent tube and connects the supporting profiles 9 at their bottom end.

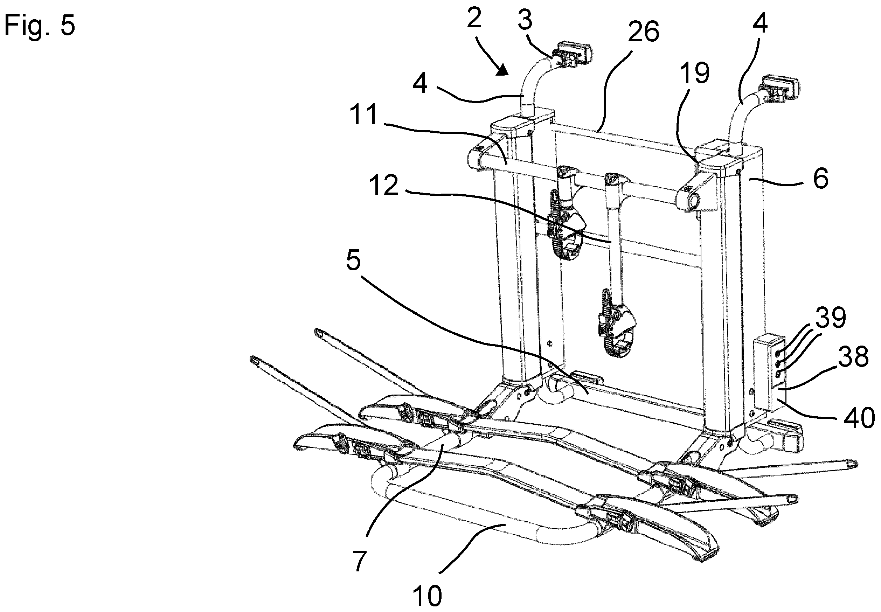

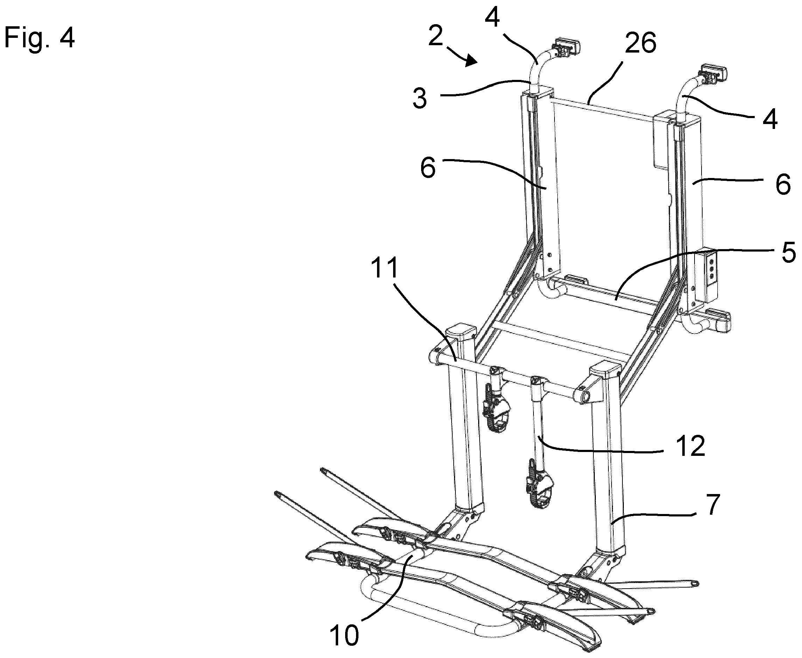

Furthermore, as it is visible for example in figures 4 and 5, the load receiving structure 7 comprises a yoke 11 which connects the supporting profiles 9 in an upper end region. The yoke 11 serves to fix the frame of bicycles via corresponding strap frame holders 12, which are shown in figures 4 and 5.

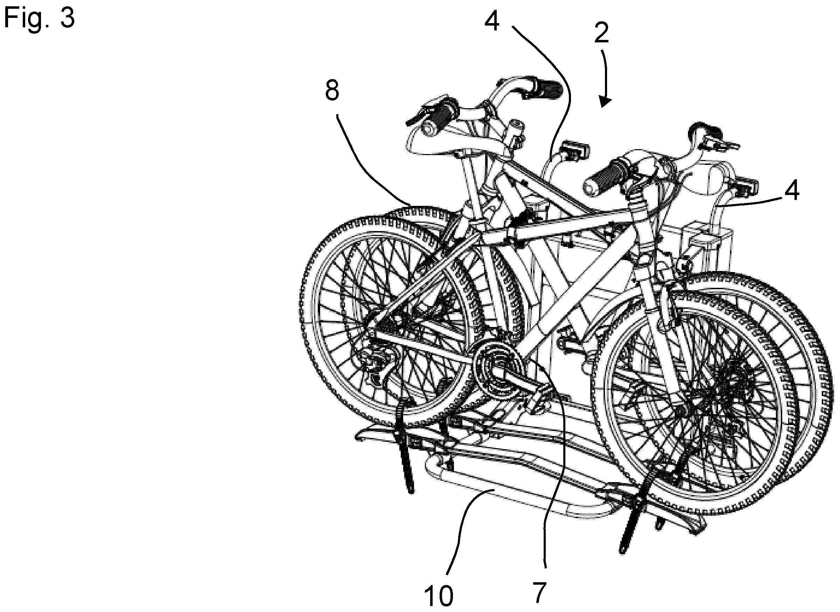

The load carrier 2 further comprises a lifting mechanism 13, via which the load receiving structure 7 is held at the basic structure 3. The load receiving structure 7 can be moved relative to the basic structure 3 between a lower loading position, which is shown in figures 2, 4, 6 and 7 for example, and an upper use position, which is shown for example in figures 3 and 5. In the lower loading position, the load receiving structure 7 is positioned near the ground when the load carrier 2 is attached to a vehicle, so that a load can be arranged on the load receiving structure 7. In the upper use position, the load receiving structure 7 is spaced apart from the ground, when the load carrier 2 is attached to a vehicle, and is directly held at the basic structure 3.

The lifting mechanism 13 comprises two linkages 14 spaced apart from one another and arranged parallel to each other. Each linkage 14 is formed as a parallelogram linkage and is assigned to one vertical profile 4 and one supporting profile 9.

Each linkage 14 comprises two cranks 15, 16, one upper crank 15 and one lower crank 16. One end of each crank 15, 16 is pivotably held at a lower end section of the basic structure 3 and the other end of each crank 15, 16 is pivotably held at an upper end section of the load receiving structure 7. The cranks 15, 16 extend at least substantially vertically, when the load receiving structure 7 is in its use position. As it is visible in figures 2, 4, 6 and 7, the cranks 15, 16 extend rearwardly and downwardly, when the load receiving structure 7 is in its loading position.

In concrete terms, the basic structure 3 comprises holding elements 17 at the bottom end section in the form of bent sheets, which are screwed to the vertical profiles 4 and which carry or hold pivot pins, by means of which the cranks 15, 16 are pivotably held. In practically the same manner, in the top end section of the supporting profiles 9 of the load receiving structure 7, the pivot pins for holding the cranks 15, 16 are held in corresponding openings formed in the supporting profiles 9.

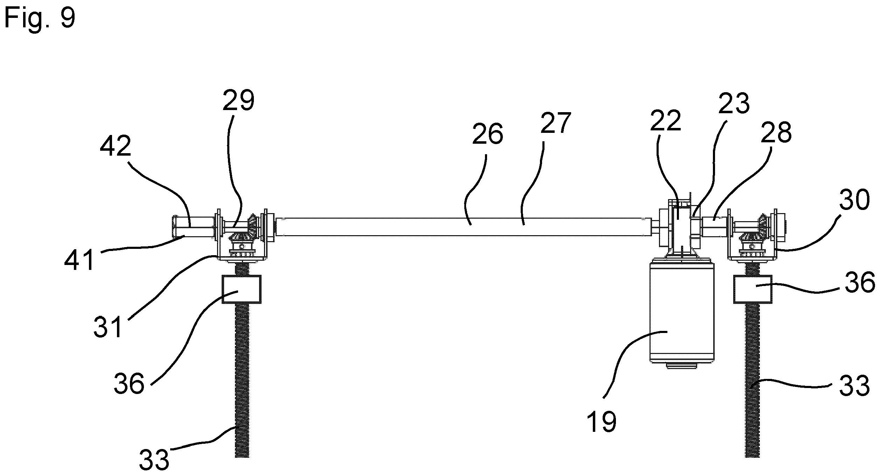

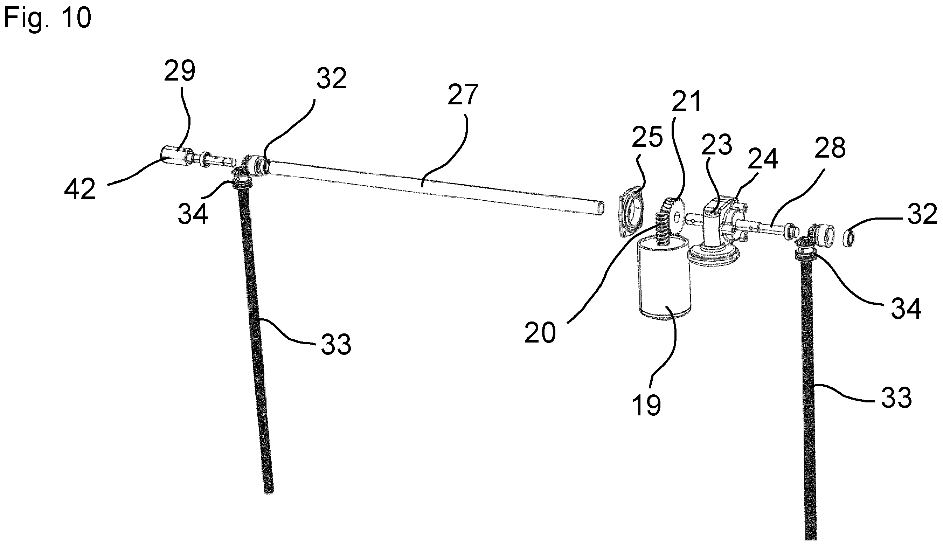

In order to move the load receiving structure 7 relative to the basic structure 3, in particular from its lower loading position into its upper use position, the lifting mechanism 13 comprises drive means 18 which are shown more in detail in figures 9 and 10.

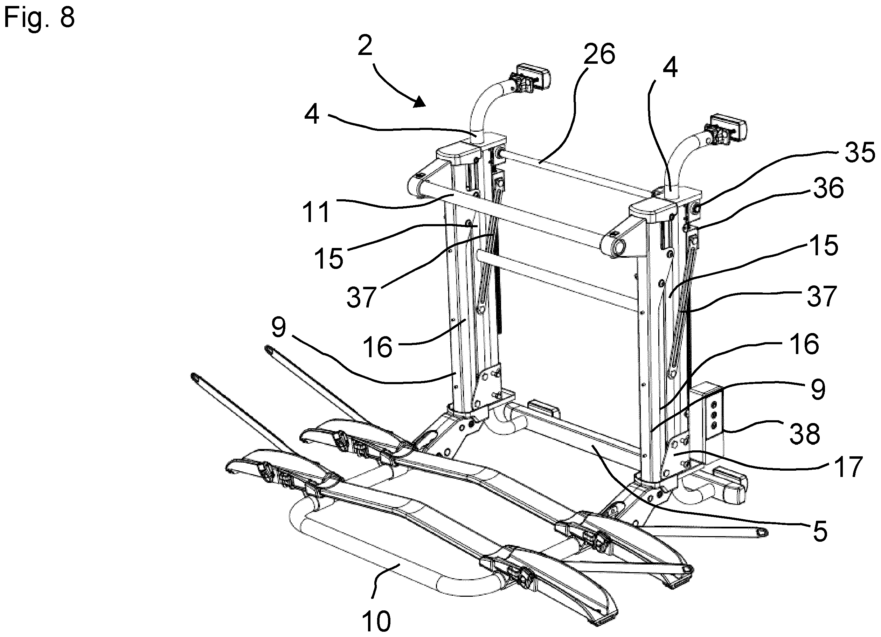

The drive means 18 comprise one electrical drive motor 19. The output shaft of the drive motor 19 is formed as a worm shaft 20. The worm shaft 20 is in engagement with a worm wheel 21 forming a worm gear 22. This worm gear 22 is arranged in a gear housing 23 comprising a main housing element 24 and a cover housing element 25 screwed thereto. The gear housing 23 is fixedly connected to the drive motor 19 and is connected via a plurality of screws to the vertical profile 4 are ranged on the right side in figures 2 to 8.

The drive means further comprise a transmission shaft 26, which is connected in a rotationally fixed manner to the worm gear 22. The transmission shaft 26 is accordingly coupled to the drive motor 19 and extends at least substantially horizontally. Furthermore, the transmission shaft 26 is held rotatably at the basic structure 3, presently at an upper end section of the vertical profiles 4.

Presently, according to a preferred embodiment, the transmission shaft 26 is formed in several pieces, namely a middle section tube 27 and two end section pieces 28, 29. The transmission shaft 26 is preferably beared in corresponding bearing elements 30, 31 via corresponding roller bearings 32. According to a preferred embodiment, the bearing elements 30, 31 are fixedly connected to the corresponding vertical profiles 4, in particular screwed thereto. Accordingly, the transmission shaft 26 is held rotatably at the basic structure 3, presently at an upper end section of the vertical profiles 4.

The drive means 18 comprise two spindles 33, which are coupled to the drive motor 19 and extend in a vertical direction. In concrete terms, the spindles 33 are held rotatably at the basic structure 3, in the present case at the vertical profile 4. They are arranged, when seen for example in figure 2, on a front side of the vertical profiles 4 under the cover elements 6.

At their upper ends, the spindles 33 are beared at the bearing elements 30, 31 by means of a roller bearing 34.

The transmission shaft 26 is coupled to each spindle 33 via a bevel gear 35 in order to ensure a synchronous rotation of both spindles 33.

The drive means 18 further comprise two spindle nuts 36, each of which is in engagement with one of the spindles 33 and/or screwed thereon, preferably such that a rotary moment of the spindle 33 is converted into a rotary movement of the spindle nut 36. Accordingly, each spindle nut 36 is an engagement with one spindle 33 such that the spindle nut 36 can be moved along a longitudinal (in the present case vertical) direction of the spindle 33, when the spindle 33 is set in rotation. Preferably, the spindle nut 36 has a quadratic cross-section, wherein one end face lies on the corresponding vertical profile 4. In this way, an unintended rotary movement of the spindle nut 36 about the longitudinal axis of the spindle 33 can be avoided. In order to move the load receiving structure 7 between its lower loading position and its upper used position, the spindle nut 36 can be moved upwards and downwards. For this purpose, each linkage 14 comprises two tension rods 37, wherein one end of each tension rod 37 is pivotably connected to a central section of the upper crank 15 and the other end of each tension rod is pivotably connected to the spindle nut 36. In this way, a movement of the spindle nut 36 along the longitudinal direction of the corresponding spindle 33 is converted into a movement of the load receiving structure 7 relative to the basic structure 3 between its lower loading position and its upper use position.

In concrete terms, the tension rods 37 are mounted on opposite lateral sides of the cranks 15 and of the spindle nuts 36. In this way, a symmetrical load can be achieved.

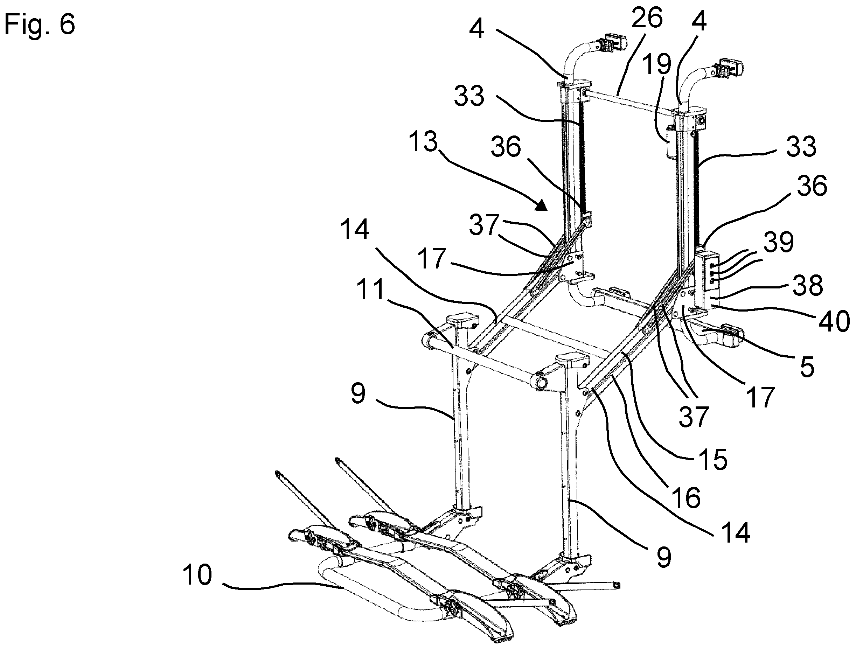

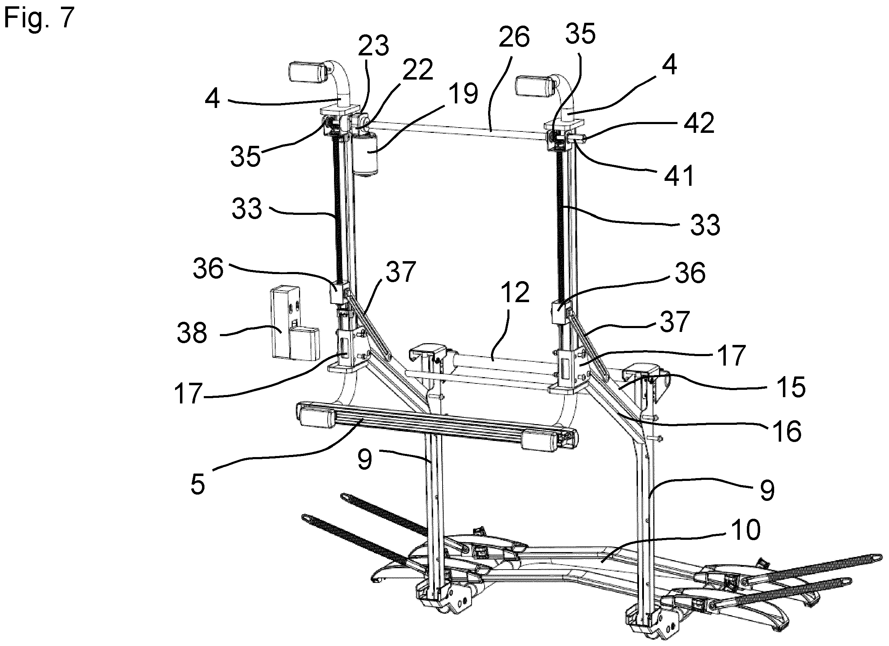

As it is for example visible in figure 6 and 7, the load carrier may further comprise a power supply unit 38 which comprises a rechargeable lithium-ion-battery, in order to supply electrical energy to the drive motor 19. The power supply unit 38 may further comprise control means in order to control the drive motor 19, presently to control the rotation speed and the direction of rotation of the drive motor 19. In order to allow an operator to control the movement of the drive motor 19 and thus of the load receiving structure 7 relative to the basic structure 3, corresponding buttons 39 are provided on a housing 40 of the power supply unit 38.

The power supply unit 38 has attachment means in order to attach the power supply unit 38 releasably to a vertical profile 4 of the basic structure 3.

When the load receiving structure 7 should be moved out of its use position shown in figures 1 and 3 into its loading position, the electrical drive motor 19 is set in rotation. Via the worm gear 22, a rotary movement of the output shaft (worm shaft 20) of the electrical drive motor 19 is converted into a rotary movement of the transmission shaft 26. Via the bevel gears 35, the rotary movement of the transmission shaft 26 is converted into a synchronous rotary movement of both spindles 33. Consequently, the spindle nuts 36, which are preferably arranged such that they cannot rotate about the longitudinal axis of the corresponding spindle 33, move downwards. The tension rods 37 move the upper crank 15 also downwards, thus moving the load receiving structure 7 towards its lower loading position.

When a bike has been attached to the load receiving structure 7 in its lower loading position, the load receiving structure 7 can be moved upwards into its use position. For this purpose, the direction of rotation of the drive motor 19 is inverted, so that the spindle nuts 36 move upwards thus lifting the load receiving structure 7 towards its upper use position. In this way, also heavier loads, for example a plurality of E-bikes 8, can be moved without manual force to be applied by the operator.

For the case that no electrical energy is available, for example if the power supply unit is completely decharged, the drive means 18 further comprise manual operating means 41, which are arranged and designed such that an operator can move the load receiving structure 7 between its upper use position and its lower loading position without operating the drive motor 19. In concrete terms, the manual operating means 41 comprise an engagement contour 42 having a hexagonal cross-section, wherein the engagement contour 42 is formed at an end section 28 of the transmission shaft 26. Accordingly, an operator can bring a corresponding tool in engagement with the engagement contour 42 in order to move the load receiving structure 7 relative to the basic structure 3. As it is visible for example in figure 7, the engagement contour 42 is accessible from a lateral side.

### LIST OF REFERENCE NUMBERS

- 1: caravan
- 2: load carrier
- 3: basic structure
- 4: vertical profile
- 5: transverse beam
- 6: cover element
- 7: load receiving structure
- 8: bike
- 9: supporting profile
- 10: central bottom section
- 11: yoke
- 12: strap frame holder
- 13: lifting mechanism
- 14: linkage
- 15: upper crank
- 16: lower crank
- 17: holding element
- 18: drive means
- 19: drive motor
- 20: worm shaft
- 21: worm wheel
- 22: worm gear
- 23: gear housing
- 24: main housing element
- 25: cover housing element
- 26: transmission shaft
- 27: middle section tube
- 28: end section piece
- 29: end section piece
- 30: bearing element
- 31: bearing element
- 32: roller bearing
- 33: spindle
- 34: roller bearing
- 35: bevel gear
- 36: spindle nut
- 37: tension rod
- 38: power supply unit
- 39: button
- 40: housing
- 41: manual operating means
- 42: engagement contour

## Claims

1. Load carrier (2), in particular bike carrier, for attachment to a vehicle, the load carrier (2) comprising
a basic structure (3), a front end of which can be attached to a vehicle, in particular to a rear wall of a caravan (1) or of a motor home, and
a load receiving structure (7) for receiving a load, in particular for receiving at least one bike (8) or a luggage box,
wherein the load carrier (2) further comprises a lifting mechanism, via which the load receiving structure (7) is held at the basic structure (3) between a lower loading position, in which the load can be arranged on the load receiving structure (7), and an upper use position, in which the load receiving structure (7) is directly held at the basic structure (3),
wherein the lifting mechanism (13) comprises drive means (18) in order to move the load receiving structure (7) between its lower loading position and its upper use position, the drive means (18) comprising at least one, in particular exactly one electrical drive motor (19),
wherein the drive means (18) comprise a power supply unit (38) comprising a battery in order to supply electrical energy to the drive motor (19),
**characterized in that** the power supply unit (38) has attachment means in
order to attach the power supply unit (38) releasably to the basic structure (3), in particular to a vertical profile of the basic structure.

2. Load carrier (2) according to claim 1, **characterized in that** the drive means (18) comprise at least one spindle (33), which is coupled to the drive motor (19) and preferably extends in a vertical direction, and a spindle nut (36), which is in engagement with the spindle (33) such that the spindle nut (36) can be moved along a longitudinal direction of the spindle (33), when the spindle (33) is set in rotation, in order to move the load receiving structure (7) between its lower loading position and its upper use position, wherein, in particular, the at least one spindle (33) is rotatably held at the basic structure (3) and the spindle nut (36) is connected to the load receiving structure (7).

3. Load carrier (2) according to claim 2, **characterized in that** the lifting mechanism (13) comprises at least one linkage (14), wherein one spindle (33) is assigned to each linkage (14), wherein, in particular, each linkage (14) is formed as a parallelogram linkage (14).

4. Load carrier (2) according to claim 3, **characterized in that** each linkage (14) comprises two cranks (15, 16), one upper crank (15) and one lower crank (16), one end of each crank (15, 16) being pivotably held at the basic structure (3) and the other end of each crank (15, 16) being pivotably held at the load receiving structure (7).

5. Load carrier (2), according to claim 4, **characterized in that** the cranks (15, 16) extend at least substantially vertically, when the load receiving structure (7) is in its upper use position, and/or
**in that** each linkage (14) comprises at least one tension rod (37), one end of which is pivotably connected to a crank (15), in particular to a central section of a crank and/or to the upper crank (15), and the other end of which is pivotably connected to the spindle nut (36) in order to move the load receiving structure (7) between the lower loading position and the upper use position, when the spindle (33) is set in rotation, wherein, in particular, each linkage (14) comprises two tension rods (37) preferably mounted on opposite lateral sites of the crank and/or of the spindle nut (36).

6. Load carrier (2) according to claim 4 or 5, **characterized in that** the cranks of each linkage (14) are held at a lower end section of the basic structure (3) at one end and at an upper end section of the load receiving structure (7) at the other end.

7. Load carrier (2) according to any of claims 3 to 6, **characterized in that** the basic structure (3) comprises at least one vertical profile (4), in particular one vertical profile (4) assigned to each linkage (14), and the cranks are held at a lower end section of the vertical profiles (4), and **in that** the load receiving structure (7) has, assigned to each vertical profile (4), a supporting profile (9), which preferably extends parallel to the vertical profile (4) and which preferably lies on the corresponding vertical profile (4), when the load receiving structure (7) is in its upper use position, wherein, in particular, each spindle (33) is arranged on a front side of the vertical profile (4) and/or is held rotatably at an upper end section and at a lower end section of a vertical profile (4).

8. Load carrier (2) according to any of claims 3 to 7, **characterized in that** the lifting mechanism (13) comprises two linkages (14) spaced apart from each other in a lateral direction and arranged parallel to each other.

9. Load carrier (2) according to claim 8 and according to any of claims 2 to 7, **characterized in that** the drive means (18) comprise a transmission shaft (26), which is coupled to the drive motor (19), in particular via a worm gear (22), and to each spindle (33) in order to ensure a synchronous rotation of both spindles (33) in particular via a bevel gear (35), wherein, in particular, the transmission shaft (26) is held rotatably at the basic structure (3), preferably at an upper end section of the vertical profiles (4), and/or wherein, in particular, the transmission shaft (26) extends at least substantially horizontally.

10. Load carrier (2) according to any of the preceding claims, **characterized in that** the drive means (18) comprise manual operating means (41), which are arranged and designed such that an operator can move the load receiving structure (7) between its upper use position and its lower loading position without operating the drive motor (19).

11. Load carrier (2) according to claim 10, **characterized in that** the manual operating means (41) comprise an engagement contour (42), in particular having a quadratic or a hexagonal cross-section, so that an operator can bring a corresponding tool in engagement in order to move the load receiving structure (7) relative to the basic structure (3).

12. Load carrier (2) according to claim 11 and according to claim 9, **characterized in that** the engagement contour (42) is formed at the transmission shaft (26) or connected to the transmission shaft (26), in particular at an end of a transmission shaft (26), preferably accessible from a lateral side.

13. Load carrier (2) according to any of the preceding claims, **characterized in that** the power supply unit (38) comprises control means in order to control the drive motor (19), in particular to control the rotation speed and the direction of rotation of the drive motor (19).

14. Vehicle, in particular a caravan (1) or a motor home, with a load carrier (2) according to any of the preceding claims.

## Patentansprüche

1. Lastenträger (2), insbesondere Fahrradträger, zur Befestigung an einem Fahrzeug, wobei der Lastenträger (2)
eine Grundstruktur (3), deren vorderes Ende an einem Fahrzeug, insbesondere an einer Rückwand eines Wohnwagens (1) oder eines Wohnmobils, befestigt werden kann, und
eine Lastaufnahmestruktur (7) zur Aufnahme einer Last, insbesondere zur Aufnahme mindestens eines Fahrrads (8) oder einer Gepäckbox umfasst,
wobei der Lastenträger (2) ferner einen Hebemechanismus aufweist, über den die Lastaufnahmestruktur (7) an der Grundstruktur (3) zwischen einer unteren Ladeposition, in der die Last auf der Lastaufnahmestruktur (7) angeordnet werden kann, und einer oberen Gebrauchsposition, in der die Lastaufnahmestruktur (7) direkt an der Grundstruktur (3) gehalten wird, gehalten ist,
wobei der Hebemechanismus (13) Antriebsmittel (18) umfasst, um die Last aufnehmende Struktur (7) zwischen ihrer unteren Ladeposition und ihrer oberen Gebrauchsposition zu bewegen, wobei die Antriebsmittel (18) mindestens einen, insbesondere genau einen elektrischen Antriebsmotor (19) umfassen,
wobei die Antriebsmittel (18) eine Stromversorgungseinheit (38) mit einer Batterie umfassen, um den Antriebsmotor (19) mit elektrischer Energie zu versorgen,
**dadurch gekennzeichnet, dass** die Stromversorgungseinheit (38) Befestigungsmittel aufweist, um die Stromversorgungseinheit (38) lösbar an der Grundstruktur (3), insbesondere an einem vertikalen Profil der Grundstruktur, zu befestigen.

2. Lastenträger (2) nach Anspruch 1, **dadurch gekennzeichnet, dass die** Antriebsmittel (18) mindestens eine Spindel (33), die mit dem Antriebsmotor (19) gekoppelt ist und sich vorzugsweise in vertikaler Richtung erstreckt, und eine Spindelmutter (36) aufweist, die mit der Spindel (33) in Eingriff steht, so dass die Spindelmutter (36) entlang einer Längsrichtung der Spindel (33) bewegbar ist, wenn die Spindel (33) in Drehung versetzt wird, um die Lastaufnahmestruktur (7) zwischen ihrer unteren Ladeposition und ihrer oberen Gebrauchsposition zu bewegen, wobei, insbesondere, die mindestens eine Spindel (33) drehbar an der Grundstruktur (3) gehalten ist und die Spindelmutter (36) mit der Lastaufnahmestruktur (7) verbunden ist.

3. Lastenträger (2) nach Anspruch 2, **dadurch gekennzeichnet, dass** der Hebemechanismus (13) mindestens ein Kurbelgetriebe (14) umfasst, wobei jedem Kurbelgetriebe (14) eine Spindel (33) zugeordnet ist, wobei, insbesondere jedes Kurbelgetriebe (14) als Parallelogramm-Kurbelgetriebe (14) ausgebildet ist.

4. Lastenträger (2) nach Anspruch 3, **dadurch gekennzeichnet, dass** jedes Kurbelgetriebe (14) zwei Kurbeln (15, 16), eine obere Kurbel (15) und eine untere Kurbel (16), umfasst, wobei ein Ende jeder Kurbel (15, 16) schwenkbar an der Grundkonstruktion (3) und das andere Ende jeder Kurbel (15, 16) schwenkbar an der Lastaufnahmevorrichtung (7) gehalten ist.

5. Lastenträger (2) nach Anspruch 4, **dadurch gekennzeichnet, dass** sich die Kurbeln (15, 16) zumindest im Wesentlichen vertikal erstrecken, wenn sich die Lastaufnahmestruktur (7) in ihrer oberen Gebrauchsposition befindet, und/oder
**dass** jedes Kurbelgetriebe (14) mindestens eine Zugstange (37) umfasst, deren eines Ende schwenkbar mit einer Kurbel (15), insbesondere mit einem Mittelabschnitt einer Kurbel und/oder mit der oberen Kurbel (15), verbunden ist und dessen anderes Ende schwenkbar mit der Spindelmutter (36) verbunden ist, um die Lastaufnahmestruktur (7) zwischen der unteren Ladeposition und der oberen Gebrauchsposition zu bewegen, wenn die Spindel (33) in Drehung versetzt wird, wobei, insbesondere, jedes Kurbelgetriebe (14) zwei Zugstangen (37) umfasst, die vorzugsweise an gegenüberliegenden Seiten der Kurbel und/oder der Spindelmutter (36) angebracht sind.

6. Lastenträger (2) nach Anspruch 4 oder 5, **dadurch gekennzeichnet, dass die** Kurbeln jedes Kurbelgetriebe (14) an einem Ende an einem unteren Endabschnitt der Grundstruktur (3) und am anderen Ende an einem oberen Endabschnitt der Lastaufnahmestruktur (7) gehalten sind.

7. Lastenträger (2) nach einem der Ansprüche 3 bis 6, **dadurch gekennzeichnet, dass** die Grundstruktur (3) mindestens ein vertikales Profil (4), insbesondere ein jedem Kurbelgetriebe (14) zugeordnetes vertikales Profil (4), umfasst und die Kurbeln an einem unteren Endabschnitt der vertikalen Profile (4) gehalten sind, und **dass** die Lastaufnahmestruktur (7) jedem vertikalen Profil (4) zugeordnet ein Stützprofil (9) aufweist, das sich vorzugsweise parallel zum vertikalen Profil (4) erstreckt und vorzugsweise auf dem entsprechenden vertikalen Profil (4) aufliegt, wenn sich die Lastaufnahmestruktur (7) in ihrer oberen Gebrauchsposition befindet, wobei, insbesondere, jede Spindel (33) an einer Vorderseite des vertikalen Profils (4) angeordnet ist und/oder an einem oberen Endabschnitt und an einem unteren Endabschnitt eines vertikalen Profils (4) drehbar gehalten ist.

8. Lastenträger (2) nach einem der Ansprüche 3 bis 7, **dadurch gekennzeichnet, dass der** Hebemechanismus (13) zwei in seitlicher Richtung voneinander beabstandete und parallel zueinander angeordnete Kurbelgetriebe (14) umfasst.

9. Lastenträger (2) nach Anspruch 8 und nach einem der Ansprüche 2 bis 7, **dadurch gekennzeichnet, dass** die Antriebsmittel (18) eine Getriebewelle (26) umfassen, die mit dem Antriebsmotor (19), insbesondere über ein Schneckengetriebe (22), und mit jeder Spindel (33) gekoppelt ist, um eine synchrone Drehung beider Spindeln (33) sicherzustellen, insbesondere über ein Kegelradgetriebe (35), wobei, insbesondere, die Getriebewelle (26) an der Grundstruktur (3), vorzugsweise an einem oberen Endabschnitt der vertikalen Profile (4), drehbar gehalten ist und/oder wobei, insbesondere, die Getriebewelle (26) zumindest im Wesentlichen horizontal verläuft.

10. Lastenträger (2) nach einem der vorstehenden Ansprüche, **dadurch gekennzeichnet, dass** die Antriebsmittel (18) manuelle Betätigungsmittel (41) umfassen, die so angeordnet und ausgelegt sind, dass ein Bediener die Lastaufnahmestruktur (7) zwischen ihrer oberen Gebrauchsposition und ihrer unteren Ladeposition bewegen kann, ohne den Antriebsmotor (19) zu betätigen.

11. Lastenträger (2) nach Anspruch 10, **dadurch gekennzeichnet, dass** die manuellen Betätigungsmittel (41) eine Eingriffskontur (42), insbesondere mit quadratischem oder hexagonalem Querschnitt, umfassen, so dass ein Bediener ein entsprechendes Werkzeug in Eingriff bringen kann, um die Lastaufnahmestruktur (7) relativ zur Grundstruktur (3) zu bewegen.

12. Lastenträger (2) nach Anspruch 11 und nach Anspruch 9, **dadurch gekennzeichnet, dass** die Eingriffskontur (42) an der Übertragungswelle (26) ausgebildet oder mit der Übertragungswelle (26) verbunden ist, insbesondere an einem Ende einer Übertragungswelle (26), vorzugsweise von einer seitlichen Seite zugänglich.

13. Lastenträger (2) nach einem der vorstehenden Ansprüche, **dadurch gekennzeichnet, dass** die Stromversorgungseinheit (38) Steuermittel umfasst, um den Antriebsmotor (19) zu steuern, insbesondere um die Drehzahl und die Drehrichtung des Antriebsmotors (19) zu steuern.

14. Fahrzeug, insbesondere Wohnwagen (1) oder Wohnmobil, mit einem Lastenträger (2) nach einem der vorstehenden Ansprüche.

## Revendications

1. Porte-charges (2), en particulier porte-vélos, destiné à être fixé à un véhicule, le porte-charges (2) comprenant
une structure de base (3) dont l'extrémité avant peut être fixée à un véhicule, en particulier à une paroi arrière d'une caravane (1) ou d'un camping-car, et
une structure de réception de charge (7) destinée à recevoir une charge, en particulier au moins un vélo (8) ou un coffre à bagages,
dans lequel le porte-charges (2) comprend en outre un mécanisme de levage, par l'intermédiaire duquel la structure de réception de charge (7) est maintenue sur la structure de base (3) entre une position de chargement inférieure, dans laquelle la charge peut être disposée sur la structure de réception de charge (7), et une position d'utilisation supérieure, dans laquelle la structure de réception de charge (7) est maintenue directement sur la structure de base (3),
dans lequel le mécanisme de levage (13) comprend des moyens d'entraînement (18) afin de déplacer la structure de réception de charge (7) entre sa position de chargement inférieure et sa position d'utilisation supérieure, les moyens d'entraînement (18) comprenant au moins un, en particulier exactement un moteur d'entraînement électrique (19),
dans lequel les moyens d'entraînement (18) comprennent une unité d'alimentation électrique (38) comprenant une batterie afin de fournir de l'énergie électrique au moteur d'entraînement (19),
**caractérisé en ce que** l'unité d'alimentation électrique (38) comporte des moyens de fixation pour fixer l'unité d'alimentation électrique (38) de manière amovible à la structure de base (3), en particulier à un profilé vertical de la structure de base.

2. Porte-charges (2) selon la revendication 1, **caractérisé en ce que les** moyens d'entraînement (18) comprennent au moins une broche (33), qui est couplée au moteur d'entraînement (19) et s'étend de préférence dans une direction verticale, et un écrou de broche (36) qui est en prise avec la broche (33) de telle sorte que l'écrou de broche (36) peut être déplacé le long d'une direction longitudinale de la broche (33), lorsque la broche (33) est mise en rotation, afin de déplacer la structure de réception de charge (7) entre sa position de chargement inférieure et sa position d'utilisation supérieure, dans lequel, en particulier, la au moins une broche (33) est maintenue de manière rotative sur la structure de base (3) et l'écrou de broche (36) est relié à la structure de réception de charge (7).

3. Porte-charges (2) selon la revendication 2, **caractérisé en ce que** le mécanisme de levage (13) comprend au moins une tringlerie (14), dans laquelle une broche (33) est associée à chaque tringlerie (14), dans lequel, en particulier, chaque tringlerie (14) est formée comme une tringlerie à parallélogramme (14).

4. Porte-charges (2) selon la revendication 3, **caractérisé en ce que** chaque tringlerie (14) comprend deux manivelles (15, 16), une manivelle supérieure (15) et une manivelle inférieure (16), une extrémité de chaque manivelle (15, 16) étant maintenue de manière pivotante sur la structure de base (3) et l'autre extrémité de chaque manivelle (15, 16) étant maintenue de manière pivotante sur la structure de réception de charge (7).

5. Porte-charges (2) selon la revendication 4, **caractérisé en ce que** les manivelles (15, 16) s'étendent au moins sensiblement verticalement lorsque la structure de réception de charge (7) est dans sa position d'utilisation supérieure, et/ou
**en ce que** chaque tringlerie (14) comprend au moins une tige de tension (37) dont une extrémité est reliée de manière pivotante à une manivelle (15), en particulier à une section centrale d'une manivelle et/ou à la manivelle supérieure (15), et dont l'autre extrémité est reliée de manière pivotante à l'écrou de broche (36) afin de déplacer la structure de réception de charge (7) entre la position de chargement inférieure et la position d'utilisation supérieure, lorsque la broche (33) est mise en rotation, dans lequel, en particulier, chaque tringlerie (14) comprend deux tiges de tension (37) montées de préférence sur des côtés latéraux opposés de la manivelle et/ou de l'écrou de broche (36).

6. Porte-charges (2) selon la revendication 4 ou 5, **caractérisé en ce que les** manivelles de chaque tringlerie (14) sont maintenues à une extrémité sur une section d'extrémité inférieure de la structure de base (3) et à l'autre extrémité sur une section d'extrémité supérieure de la structure de réception de charge (7).

7. Porte-charges (2) selon l'une quelconque des revendications 3 à 6, **caractérisé en ce que** la structure de base (3) comprend au moins un profilé vertical (4), en particulier un profilé vertical (4) associé à chaque tringlerie (14), et les manivelles sont maintenues à une extrémité inférieure des profilés verticaux (4), et **en ce que** la structure de réception de charge (7) comporte, associé à chaque profilé vertical (4), un profilé de support (9) qui s'étend de préférence parallèlement au profilé vertical (4) et qui repose de préférence sur le profilé vertical (4) correspondant, lorsque la structure de réception de charge (7) est dans sa position d'utilisation supérieure, dans lequel, en particulier, chaque broche (33) est disposée sur un côté avant du profilé vertical (4) et/ou est maintenue de manière rotative à une section d'extrémité supérieure et à une section d'extrémité inférieure d'un profilé vertical (4).

8. Porte-charges (2) selon l'une quelconque des revendications 3 à 7, **caractérisé en ce que le** mécanisme de levage (13) comprend deux tringleries (14) espacées l'une de l'autre dans une direction latérale et disposées parallèlement l'une à l'autre.

9. Porte-charges (2) selon la revendication 8 et selon l'une quelconque des revendications 2 à 7, **caractérisé en ce que** les moyens d'entraînement (18) comprennent un arbre de transmission (26) qui est couplé au moteur d'entraînement (19), en particulier via un engrenage à vis sans fin (22), et à chaque broche (33) afin d'assurer une rotation synchrone des deux broches (33), en particulier via un engrenage conique (35), dans lequel, en particulier, l'arbre de transmission (26) est maintenu de manière rotative sur la structure de base (3), de préférence au niveau d'une section d'extrémité supérieure des profilés verticaux (4), et/ou dans lequel, en particulier, l'arbre de transmission (26) s'étend au moins sensiblement horizontalement.

10. Porte-charges (2) selon l'une quelconque des revendications précédentes, **caractérisé en ce que** les moyens d'entraînement (18) comprennent des moyens d'actionnement manuels (41) qui sont agencés et conçus de telle sorte qu'un opérateur peut déplacer la structure de réception de charge (7) entre sa position d'utilisation supérieure et sa position de chargement inférieure sans actionner le moteur d'entraînement (19).

11. Porte-charges (2) selon la revendication 10, **caractérisé en ce que** les moyens d'actionnement manuels (41) comprennent un contour d'engagement (42), en particulier ayant une section transversale quadratique ou hexagonale, de sorte qu'un opérateur peut mettre en prise un outil correspondant afin de déplacer la structure de réception de charge (7) par rapport à la structure de base (3).

12. Porte-charges (2) selon la revendication 11 et selon la revendication 9, **caractérisé en ce que** le contour d'engagement (42) est formé sur l'arbre de transmission (26) ou relié à l'arbre de transmission (26), en particulier à une extrémité d'un arbre de transmission (26), de préférence accessible depuis un côté latéral.

13. Porte-charges (2) selon l'une quelconque des revendications précédentes, **caractérisé en ce que** l'unité d'alimentation électrique (38) comprend des moyens de commande pour commander le moteur d'entraînement (19), en particulier pour commander la vitesse de rotation et le sens de rotation du moteur d'entraînement (19).

14. Véhicule, en particulier caravane (1) ou camping-car, avec un porte-charges (2) selon l'une quelconque des revendications précédentes.
